# EUROPEAN PATENT SPECIFICATION

(11) **EP 1 979 787 B1**
(45) Date of publication and mention of the grant of the patent: **03.03.2010**
(21) Application number: 07705476.5
(22) Date of filing: 29.01.2007
(51) Int. Cl.: G03B 21/20, F21V 7/00

(54) **PROJECTION APPARATUS WITH LAMP MOVING SYSTEM**
PROJEKTIONSVORRICHTUNG MIT LAMPENBEWEGUNGSSYSTEM
APPAREIL DE PROJECTION MUNI D'UN SYSTEME DE DEPLACEMENT DE LAMPE

(30) Priority: 31.01.2006 IT TO20060064
(43) Date of publication of application: 15.10.2008
(73) Proprietor: SIM2 Multimedia S.p.A., 33170 Pordenone (IT)
(72) Inventor: BURIOLA, Luigi, I-31010 Orsago (TV) (IT)
(74) Representative: Dini, Roberto
(86) International application number: PCT/IB2007/000186
(87) International publication number: WO 2007/088441

(56) References cited:
- EP-A1- 0 866 360
- DE-A1- 4 316 623
- JP-A- 11 103 468
- JP-A- 2000 162 706
- US-A- 5 032 962

## Description

The present invention relates to a projection apparatus, in particular a videoprojector, according to the preamble of claim 1.

Projection apparatuses substantially comprise two main groups of components: the illumination system and the projection system.

The illumination system comprises one or more light sources, usually arc lamps, but also incandescent or LED lamps, which generate the light required for projecting the image and which typically comprise a parabolic or elliptic reflector. Generally, the illumination system also includes a first group of optical elements; for example, as far as videoprojectors are concerned, the aspheric condenser and the integrating bar, used for smoothing the beam generated by the source, can be considered as being parts of the illumination system.

Instead, the projection system takes care of collecting the light generated by the illumination system and of treating it appropriately in order to generate the image, in particular the pixels of the image (in videoprojectors, sequences of images).

Depending on whether the projection apparatus is a film projector (i.e. a videoprojector) or an image projector, e.g. a slide projector, the projection system may change significantly, but nonetheless both projection apparatuses still use an illumination system having many elements and problems in common.

Since the present invention relates in particular to the illumination system, it can be generally applied to any projection apparatus, whether for films or for images. However, the following description will refer, by way of example and not by way of limitation, to videoprojectors.

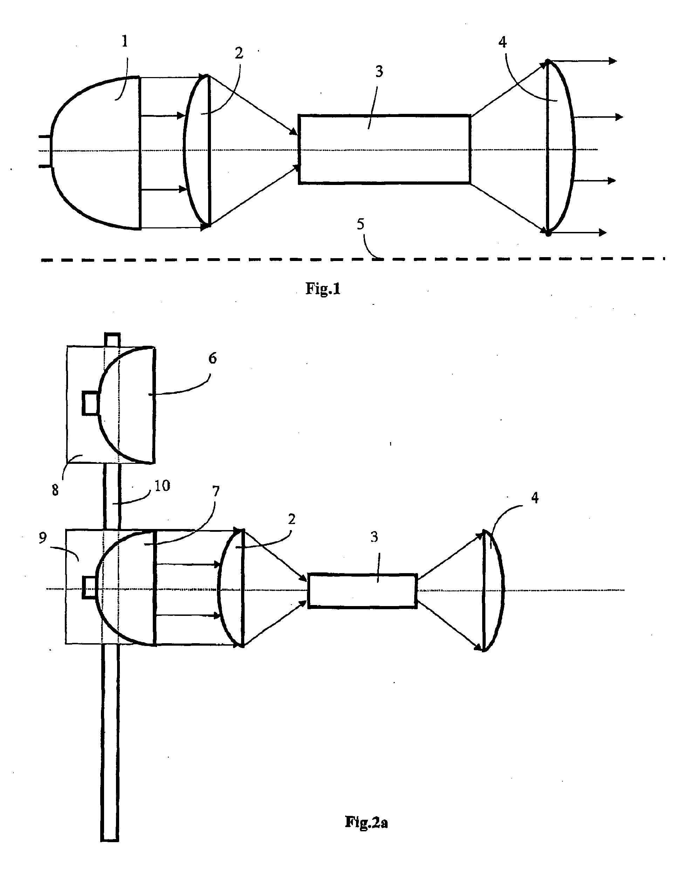

As aforementioned, a known videoprojector, a detail of which is schematically shown in Fig. 1, comprises a lamp 1 with an associated parabolic reflector, which emits a light beam typically having a circular section. Said beam is sent by the aspheric condenser, designated by reference number 2, to integrating bar 3, consisting of an parallelepiped made of optical-glass, which smoothes the output light beam.

The light beam exiting the integrating bar is collected by the illumination system, in particular the light is collected by a system of converging lenses, known as relay lenses and schematically designated by reference numeral 4, and is then sent to a system of prisms, not shown in Fig. 1, which, according to known techniques, disassemble the light beam into the three primary components, which are conveyed towards the active surface of three different panels, e.g. three DMDs. The dashed line designated by reference number 5 represents schematically the section of the videoprojector supporting plane.

When the lamp is out of order, a videoprojector as described above stops working and the lamp must be replaced; this operation requires the availability of a spare lamp and takes a long time.

In some applications demanding the automatic and quick replacement of the light source (e.g. to ensure limited out-of-service times in the event of a trouble, or for programmed replacements), the projection apparatus comprises a spare lamp which can be brought quickly to the work position in order to replace the broken lamp.

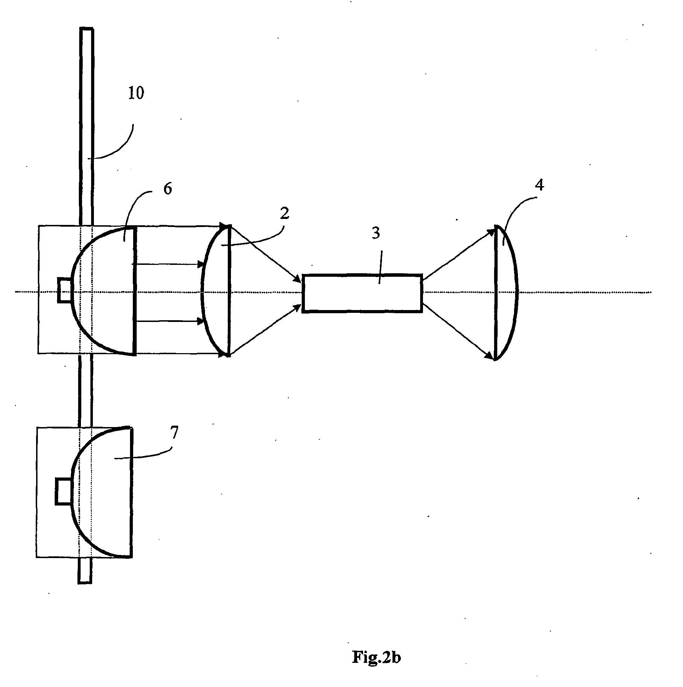

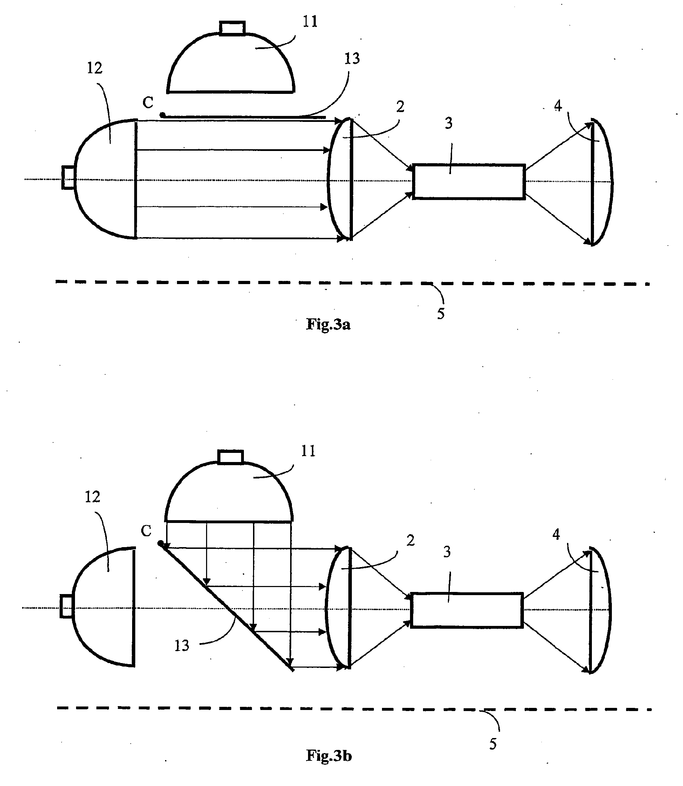

Figs. 2 and 3 show two known projector solutions including a main lamp and a spare lamp.

In the first solution of Fig. 2a, two lamps 6 and 7 are contained in respective supports 8 and 9, which can only slide vertically along a guide 10.

In Fig. 2a, lamp 7 is operating, while lamp 6 is an out-of-service spare lamp.

If lamp 7 is out of order, by pushing the lamps manually downwards it is possible to obtain the situation of Fig. 2b, wherein the roles of the two lamps are reversed: lamp 6 is operating, while lamp 7 can be replaced and used as a spare lamp. The next replacement will be carried out by moving lamps 6 and 7 upwards.

The solution of Fig.2a suffers from the main drawback of requiring much room in the extension direction of guide 10. Therefore, if the illumination system and the projection system are contained in the same container, it becomes difficult to limit the dimensions of the projection apparatus.

A further drawback of the systems shown in Figs. 2a and 2b is that it is difficult to ensure an accurate positioning and orientation of the lamps in both situations (Fig.2a and Fig.2b); in fact, if the lamp is not positioned and oriented accurately on the aspheric condenser, there will be a remarkable loss of efficiency.

In order to obviate the aforementioned drawback, it has been proposed the system of Fig.3. In this case, both lamps 11 and 12 are fixed and the light source is switched by turning mirror 13 pivoted to point C, as shown in Figs. 3a and 3b. When the mirror is in the position of Fig. 3a, lamp 12 is operating and lamp 11 is the spare one; by turning mirror 13 by 45° as shown in Fig. 3b, lamp 11 becomes active and lamp 12 can be replaced and become the spare lamp.

This solution particularly suffers from the drawback that both light sources 11 and 12 must be located farther from condenser 2, thus extending the path of the light beams produced by the lamps and reducing the optical efficiency of the system.

The main object of the present invention is to find a solution which represents an alternative to the systems known in the art and which allows to replace a lamp simply and quickly without altering the optical path.

It is a further object of the present invention to solve the positioning and orientation problems of lamps used in projection apparatus, wherein the lamps are replaced through a mechanical movement of the same.

These and other objects of the present invention are achieved through a projection apparatus incorporating the features set out in the appended claims, which are intended as an integral part of the present description.

Further objects and advantages of the present invention will become apparent from the following detailed description and from the annexed drawings, which are supplied by way of non-limiting example, wherein:
Fig.1 shows a known videoprojector illumination system using one lamp,
Figs.2 show a known device for moving lamps,
Figs.3 show a second known device for moving lamps,
Figs.4 show a first embodiment of a device for moving lamps according to the invention, and
Fig. 5 shows a second embodiment of a lamp moving device according to the invention.

Note that blocks designated by the same reference munber in the various drawings have the same function; also, the drawings represent a projection on a vertical plane of the various devices described herein.

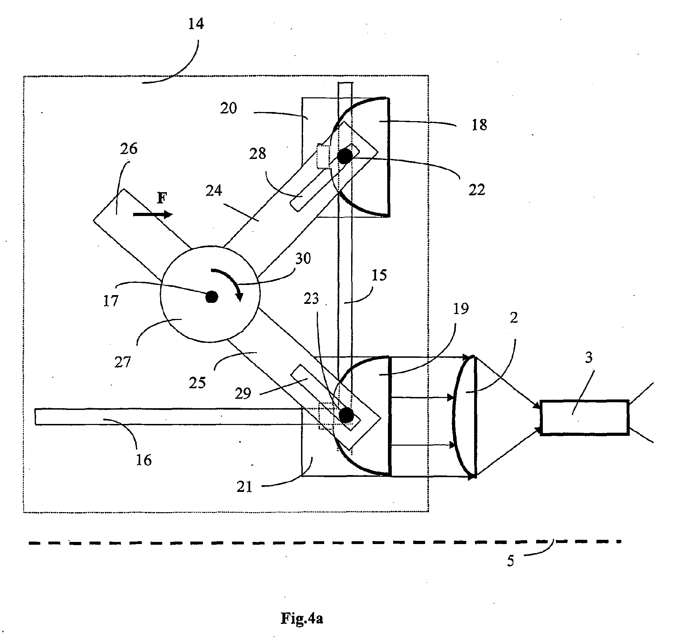

Referring to Fig. 4a, the device comprises:
- a rigid container, designated by reference number 14, fitted with two straight guides, designated by reference number 15 and 16, forming an angle of approximately 90°.
- a mechanic pin, designated by reference number 17, anchored to two walls of said container, not shown.
- two lamps, designated by reference number 18 and 19, contained in respective supports, designated by reference number 20 and 21. Said supports are integral with pins 22 and 23, respectively; as highlighted in Fig. 4a, pin 22 can slide vertically in guide 15, whereas pin 23 can slide horizontally in guide 16.
- two arms, designated by reference number 24 and 25, made integral with each other, e.g. by rigidly fixing both of them to a support, designated by reference number 27, which can rotate about pin 17.

In the condition shown in Fig. 4a, lamp 19 is operating since it is sending its light beam to the optical system through aspheric condenser 2, while lamp 18 is the spare one. Of course, for the light beam to reach aspheric condenser 2, container 14 must have an aperture corresponding to said condenser, not shown in the drawing.

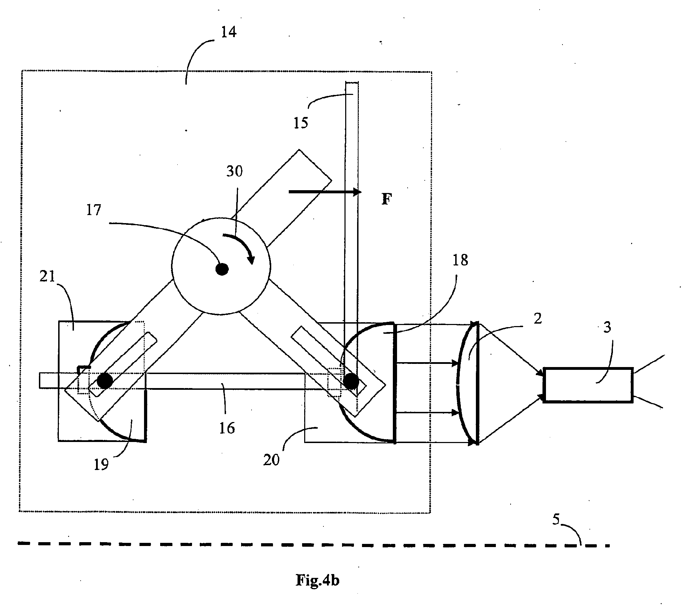

When a force F is applied, e.g. manually, to lever 26, which is secured to support 27, as shown in Fig. 4a, support 27 and thus arms 24 and 25 turn in the direction indicated by the arrow designated by reference number 30. The rotation of arm 24 produces a downward vertical translation of lamp 18, because pin 22 is forced to slide in guide 15 and because this motion is allowed by the groove designated by reference number 28, obtained in arm 24, within which said pin can move. At the same time, the rotation of arm 25 produces a horizontal translation to the left of lamp 19, because pin 23 is forced to slide in guide 16 and because this motion is allowed by the groove designated by reference number 29, obtained in arm 25, within which pin 23 can move. Said rotation, and therefore the lamp replacement operation, ends when the device arrives at the position of Fig. 4b, wherein lamp 18 is illuminating the system, while lamp 19 can be replaced and used as a spare lamp.

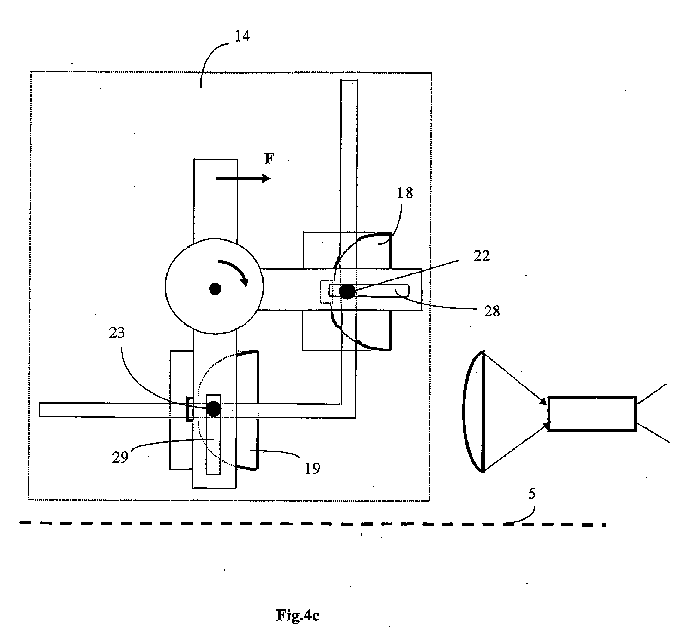

For clarity, Fig. 4c shows an intermediate position of the device, between the initial position of Fig. 4a and the final position of Fig. 4b; note the positions of pins 22 and 23 in respective grooves 28 and 29. Of course, in order to replace lamp 18 it is necessary to reverse the rotation direction of arms 24 and 25 shown in Figs. 4, and therefore a force being opposite to that shown in said drawings must be applied, e.g. manually, to lever 27.

The advantages of the proposed device are apparent from the above description: the movement of the lamps takes place on the same side with respect to supporting plane 5 of the videoprojector, without causing any accessibility or room problems and without extending the path of the light beam directed towards the optical system.

Furthermore, the operating position of the lamp is represented by the vertex wherein the guides 15 and 16 converge; therefore, its position relative to the aspheric condenser 2 is very accurate and any risk of misalignment is very low; this applies to both the lamp mounted to support 20 and the lamp mounted to support 21.

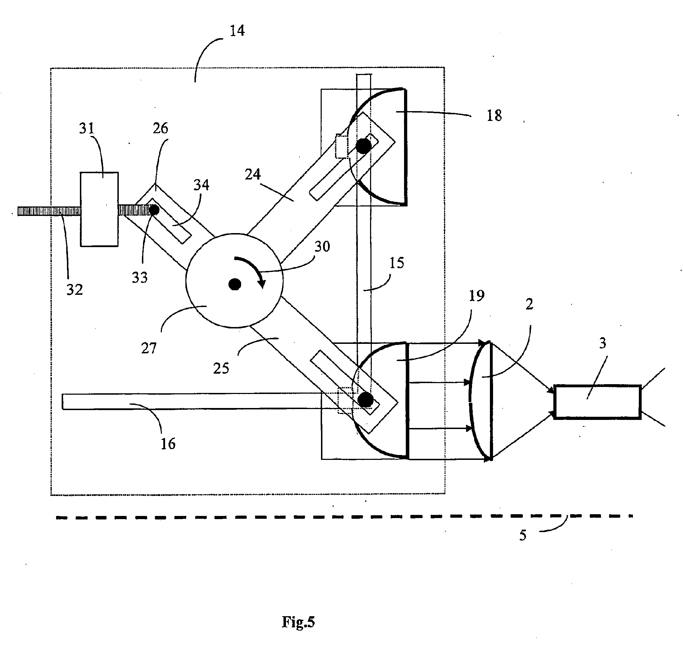

Instead of manually, the force required for turning the arms may be, for example, obtained through an electric motor, as schematized in Fig. 5: the motor, designated by number 31, is fastened to container 14 and is fitted, according to a known technique, with a threaded rotor, not shown in Fig. 5, which produces a horizontal linear motion of the worm screw designated by number 32; in turn, said screw moves pin 33, thereby transmitting to lever 26 the force necessary for the rotation of support 27, and thus of arms 24 and 25, about pin 17. The horizontal motion of pin 33 is facilitated by groove 34. Container 14 may have an aperture, not shown in Fig.5, to allow screw 32 to pass through.

According to a further embodiment, not shown in the drawings, the turning motion can be attained by fitting support 27 directly to the shaft of a motor.

Also, the movement of the two light sources, in particular of the two supports associated with the two light sources, may be attained by means of two respective motors.

By using a motor for moving the lamps, it is possible to provide an automatic lamp replacement function: by using known technologies, in the event of a failure a sensor detects the off condition of a lamp and sends a suitable signal to a circuit controlling the motor, which is then started in the required direction.

It is clear that many changes may be made to the lamp moving device according to present invention without departing from the novelty spirit of the inventive idea.

For example, the automatic replacement of a lamp may take place not only when a failure occurs, but also at predetermined intervals, so as to divide the total operating time between different sources, or to be able to use sources having different specifications, e.g. power; in these cases, the motor is controlled, for example, by a suitably programmed electronic microprocessor unit.

Moreover, control means (connected to an electronic unit by cable and/or radio) may be provided to allow a user or a service technician to replace and/or exchange the lamps as desired; for example, the system may comprise a control keypad (and possibly a display).

Finally, the guides for the motion of the light sources, in particular of the supportin elements, may be either straight and form angles different from 90° (e.g. 100° or 110° or 120°) or at least partially curvilinear, but preferably still converging in a vertex.

## Claims

1. Projection apparatus comprising:
- a main light source adapted to generate a light beam, and located in a work position
wherein said main light source is aligned with an optical projection system,
- a spare light source adapted to replace said main light source, and located in a first idle position,
- guiding means adapted to allow for a guided motion of said main light source and of said spare light source in order to move said main light source from said work position to a second idle position and to move said spare light source from said first idle position to said work position,
wherein said guiding means allow said main light source to move along a first motion trajectory being different from a second motion trajectory of said spare light source, and **characterized in that** said guiding means comprise two guides converging in a vertex corresponding to said work position.

2. Projection apparatus according to claim 1, wherein said guiding means comprise two orthogonal and converging straight guide portions.

3. Projection apparatus according to any of the preceding claims, further comprising means for moving said light sources, in particular support means associated with said light sources, wherein said moving means comprise at least one arm having a longitudinal groove wherein a pin integral with a light source of said apparatus is inserted, said arm being integral with a rotary element, so that the rotation of said arm exerts a force on the pin to move said light source.

4. Projection apparatus according to claim 3, wherein said moving means comprise two arms each having a longitudinal groove in which a pin integral with a light source of said apparatus is inserted, said arms being integral with a rotary element and being freely pivoted to said main light source and to said spare light source, respectively, so that, through the rotation of said rotary element, said arms exert a force on the respective pins to move the respective light sources.

5. Projection apparatus according to claim 3 or 4, **characterized by** comprising a motorized system to control the rotation of said rotary element, said motorized system comprising a motor controlled by an electronic unit of said projection apparatus, said electronic unit being adapted to control said motor according to operating parameters of said apparatus.

6. Projection apparatus according to claim 5, wherein said operating parameters comprise a total operating time of said projection light sources.

7. Projection apparatus according to claim 6, wherein at each projection said control unit is adapted to move to the work position the light source having less operating hours between said main light source and said spare light source.

8. Projection apparatus according to claim 5 or 6 or 7, wherein said operating parameters comprise a trouble indication relating to a light source.

9. Projection apparatus according to claim 8, **characterized by** comprising a sensor adapted to detect a failure of a light source and to send a trouble signal to said control unit.

10. Projection apparatus according to any of the preceding claims, wherein said main light source and said spare light source have different technical specifications, and wherein said projection apparatus further comprises an electronic unit adapted to move to the work position a light source selected on the basis of a command sent by a user through control means.

11. Projection apparatus according to any of claims 3 to 10, wherein said moving system comprises transmission means (32) adapted to convert a rotary motion of a rotor of a motor (31) into a translational motion of a thrust pin (33) sliding in a groove of a lever (26) being integral with a rotary element.

12. Projection apparatus according to claim 11, wherein said transmission means comprise a worm screw system (32) coupled to a thread of said rotor and adapted to cause a translation of said pin (33).

13. Projection apparatus according to any of claims 3 to 10, wherein said moving means comprise a shaft being integral with a rotary element and a motor adapted to turn said shaft.

14. Projection apparatus according to any of claims 3 to 10, wherein said moving means comprise two motors adapted to move said main light source and said spare light source, respectively, in particular support means associated with said light sources.

15. Projection apparatus according to any of the preceding claims, **characterized in that** the underside of a light source in the work position rests on a supporting base of said apparatus.

## Patentansprüche

1. Projektionsvorrichtung mit:
- einer Haupt-Lichtquelle, die ausgestaltet ist, einen Lichtstrahl zu erzeugen, und die an einer Arbeitsposition angeordnet ist, wobei die Haupt-Lichtquelle mit einem optischen Projektionssystem ausgerichtet ist,
- einer Ersatz-Lichtquelle, die ausgestaltet ist, die Haupt-Lichtquelle zu ersetzen und die in einer ersten Ruheposition angeordnet ist,
- Führungsmitteln, die ausgestaltet sind, eine geführte Bewegung der Haupt-Lichtquelle und der Ersatz-Lichtquelle zu erlauben, um die Haupt-Lichtquelle von der Arbeitsposition zu einer zweiten Ruheposition zu bewegen und die Ersatz-Lichtquelle von der ersten Ruheposition zu der Arbeitsposition zu bewegen,
wobei die Führungsmittel der Haupt-Lichtquelle erlauben, sich entlang einer ersten Bewegungstrajektorie zu bewegen, die sich von einer zweiten Bewegungstrajektorie der Ersatzlichtquelle unterscheidet, und
**gekennzeichnet dadurch, dass** die Führungsmittel zwei Führungen aufweisen, die in einer Ecke zusammenlaufen, die der Arbeitsposition entspricht.

2. Projektionsvorrichtung nach Anspruch 1,
wobei die Führungsmittel zwei orthogonale und zusammenlaufende, gerade Führungsabschnitte umfassen.

3. Projektionsvorrichtung nach einem der vorstehenden Ansprüche,
ferner mit Mitteln zum Bewegen der Lichtquellen, insbesondere Tragemitteln, die den Lichtquellen zugeordnet sind, wobei die Bewegungsmittel wenigstens einen Arm mit einem longitudinalen Schlitz aufweisen, in den ein Stift eingeführt ist, der integral mit einer Lichtquelle der Vorrichtung ist, wobei der Arm einem Rotationselement integral ist, so dass die Rotation des Arms eine Kraft auf den Stift ausübt, um die Lichtquelle zu bewegen.

4. Projektionsvorrichtung nach Anspruch 3,
wobei die Bewegungsmittel zwei Arme aufweisen, die jeweils einen longitudinalen Schlitz aufweisen, in den ein Stift eingeführt ist, der integral mit einer Lichtquelle der Vorrichtung ist, wobei beide Arme integral mit einem Rotationselement sind und in einer freien Weise jeweils gegenüber der Haupt-Lichtquelle und der Ersatz-Lichtquelle schwenkbar sind, so dass, in Folge der Rotation des Rotationselements die Arme eine Kraft auf die jeweiligen Stifte ausüben, um die jeweiligen Lichtquellen zu bewegen.

5. Projektionsvorrichtung nach Anspruch 3 oder 4,
**dadurch gekennzeichnet, dass** sie ein motorisiertes System aufweist, um die Rotation des Rotationselements zu steuern, wobei das motorisierte System einen Motor aufweist, der von einer elektronischen Einheit der Projektionsvorrichtung gesteuert wird, wobei die elektronische Einheit dazu ausgestaltet ist, den Motor gemäß Betriebsparametern der Vorrichtung zu steuern.

6. Projektionsvorrichtung nach Anspruch 5,
wobei die Betriebsparameter eine Gesamtbetriebszeit der Projektions-Lichtquellen umfassen.

7. Projektionsvorrichtung nach Anspruch 6,
wobei bei jeder Projektion die Steuereinheit dazu ausgestaltet ist, die Lichtquelle zu der Arbeitsposition zu bewegen, die, ausgewählt aus der Haupt-Lichtquelle und der Ersatz-Lichtquelle, die wenigsten Betriebsstunden aufweist.

8. Projektionsvorrichtung nach Anspruch 5 oder 6 oder 7,
wobei die Betriebsparameter eine Problemangabe bezüglich einer Lichtquelle umfassen.

9. Projektionsvorrichtung nach Anspruch 8,
**dadurch gekennzeichnet, dass** sie einen Sensor aufweist, der ausgestaltet ist, ein Versagen einer Lichtquelle zu erfassen und ein Problemsignal an die Steuereinheit zu senden.

10. Projektionsvorrichtung nach einem der vorstehenden Ansprüche,
wobei die Haupt-Lichtquelle und die Ersatz-Lichtquelle unterschiedliche technische Spezifikationen aufweisen und wobei die Projektionsvorrichtung ferner eine elektronische Einheit aufweist, die ausgestaltet ist, eine Lichtquelle zu der Arbeitsposition zu bewegen, die auf Basis eines Befehls ausgewählt ist, der von einem Benutzer mittels Steuermitteln gesendet wurde.

11. Projektionsvorrichtung nach einem der Ansprüche 3 bis 10,
wobei das Bewegungssystem Transmissionsmittel (32) aufweist, die ausgestaltet sind, eine Rotationsbewegung eines Rotors eines Motors (31) in eine translatorische Bewegung eines Druckbolzens (33) umzusetzen, der in einem Schlitz eines Hebels (26) gleitet, der integral mit einem Rotationselement ist.

12. Projektionsvorrichtung nach Anspruch 11,
wobei die Transmissionsmittel ein Spiralschraubensystem (32) aufweisen, das mit einem Strang des Rotors gekoppelt ist und das ausgestaltet ist, eine Translation des Bolzens (33) zu verursachen.

13. Projektionsvorrichtung nach einem der Ansprüche 3 bis 10,
wobei die Bewegungsmittel eine Welle aufweisen, die integral mit einem Rotationselement ist, und einen Motor, der ausgestaltet ist, die Welle zu drehen.

14. Projektionsvorrichtung nach einem der Ansprüche 3 bis 10,
wobei die Bewegungsmittel zwei Motoren aufweisen, die ausgestaltet sind, jeweils die Haupt-Lichtquelle und die Ersatz-Lichtquelle zu bewegen, insbesondere Tragemittel, die den Lichtquelle zugeordnet sind.

15. Projektionsvorrichtung nach einem der vorstehenden Ansprüche,
**dadurch gekennzeichnet, dass** die Unterseite einer Lichtquelle in der Arbeitsposition auf einer Tragebasis der Vorrichtung ruht.

## Revendications

1. Appareil de projection comprenant :
- une source de lumière principale adaptée pour générer un faisceau de lumière et placée dans une position de fonctionnement dans laquelle ladite source de lumière principale est alignée avec un système de projection optique,
- une source de lumière de rechange adaptée pour remplacer ladite source de lumière principale, et située dans une première position de repos,
- des moyens de guidage adaptés pour permettre un déplacement guidé de ladite source de lumière principale et de ladite source de lumière de rechange afin de faire passer ladite source de lumière principale de ladite position de fonctionnement à une seconde position de repos et de faire passer ladite source de lumière de rechange de ladite première position de repos à ladite position de fonctionnement,
dans lequel lesdits moyens de guidage permettent à ladite source de lumière principale de se déplacer le long d'une première trajectoire de déplacement différente d'une seconde trajectoire de déplacement de ladite source de lumière de rechange, et **caractérisé en ce que** lesdits moyens de guidage comportent deux guides convergeant vers un sommet correspondant à ladite position de fonctionnement.

2. Appareil de projection selon la revendication 1, dans lequel lesdits moyens de guidage comportent deux parties de guidage rectilignes orthogonales et convergentes.

3. Appareil de projection selon l'une quelconque des revendications précédentes comportant, de plus, des moyens permettant de déplacer les sources de lumière, en particulier des moyens de support associés auxdites sources de lumière, dans lequel lesdits moyens de déplacement comprennent au moins un bras présentant une gorge longitudinale dans laquelle une broche solidaire d'une source de lumière dudit appareil est insérée, ledit bras étant solidaire d'un élément rotatif, de sorte que la rotation dudit bras exerce une force sur la broche afin de déplacer ladite source de lumière.

4. Appareil de projection selon la revendication 3, dans lequel lesdits moyens de déplacement comportent deux bras présentant chacun une gorge longitudinale dans laquelle une broche solidaire d'une source de lumière dudit appareil est insérée, lesdits bras étant solidaires d'un élément rotatif et étant à pivotement libre pour ladite source de lumière principale et ladite source de lumière de rechange, respectivement, de sorte que, par l'intermédiaire de la rotation dudit élément rotatif, lesdits bras exercent une force sur les broches respectives en vue de déplacer lesdites sources de lumière respectives.

5. Appareil de projection selon la revendication 3 ou 4, **caractérisé par** le fait de comporter un système motorisé pour commander la rotation dudit élément rotatif, ledit système motorisé comprenant un moteur commandé par une unité électronique dudit appareil de projection, ladite unité électronique étant adaptée pour commander ledit moteur selon des paramètres de fonctionnement dudit appareil.

6. Appareil de projection selon la revendication 5, dans lequel lesdits paramètres de fonctionnement comportent un temps de fonctionnement total desdites sources de lumière de projection.

7. Appareil de projection selon la revendication 6, dans lequel au niveau de chaque projection ladite unité de commande est adaptée pour déplacer vers la position de fonctionnement la source de lumière qui présente le moins d'heures de fonctionnement entre ladite source de lumière principale et ladite source de lumière de rechange.

8. Appareil de projection selon la revendication 5 ou 6 ou 7, dans lequel lesdits paramètres de fonctionnement comportent une indication de panne concernant une source de lumière.

9. Appareil de projection selon la revendication 8,
**caractérisé par** le fait de comporter un capteur adapté pour détecter une défaillance d'une source de lumière et pour transmettre un signal de panne à ladite unité de commande.

10. Appareil de projection selon l'une quelconque des revendications précédentes, dans lequel ladite source de lumière principale et ladite source de lumière de rechange présentent des spécifications techniques différentes, et dans lequel ledit appareil de projection comporte, de plus, une unité électronique adaptée pour déplacer vers la position de fonctionnement une source de lumière sélectionnée sur la base d'une commande transmise par un utilisateur par l'intermédiaire des moyens de commande.

11. Appareil de projection selon l'une quelconque des revendications 3 à 10, dans lequel ledit système de déplacement comprend des moyens de transmission (32) adaptés pour convertir un mouvement de rotation du rotor d'un moteur (31) en un mouvement de translation d'une broche de transmission de poussée (33) coulissant dans une gorge d'un levier (26) solidaire d'un élément rotatif.

12. Appareil de projection selon la revendication 11, dans lequel lesdits moyens de transmission comportent un système de vis sans fin (32) couplé à un filetage dudit rotor et adapté (pour entraîner une translation de ladite broche (33).

13. Appareil de projection selon l'une quelconque des revendications 3 à 10, dans lequel lesdits moyens de déplacement comportent un arbre qui est solidaire d'un élément rotatif et un moteur adapté pour faire tourner ledit arbre.

14. Appareil de projection selon l'une quelconque des revendications 3 à 10, dans lequel lesdits moyens de déplacement comportent deux moteurs adaptés pour déplacer ladite source de lumière principale et ladite source de lumière de rechange, respectivement, en particulier des moyens de support associés auxdites sources de lumière.

15. Appareil de projection selon l'une quelconque des revendications précédentes, **caractérisé en ce que** la partie inférieure d'une source de lumière dans la position de fonctionnement repose sur une base de support dudit appareil.
